# EUROPÄISCHE PATENTSCHRIFT

(11) **EP 0 950 819 B1**
(45) Veröffentlichungstag und Bekanntmachung des Hinweises auf die Patenterteilung: **17.03.2004**
(21) Anmeldenummer: 99890038.5
(22) Anmeldetag: 03.02.1999
(51) Int. Cl.: F16B 13/12

(54) **Befestigungsanordnung**
Fastening arrangement
Système de fixation

(30) Priorität: 14.04.1998 AT 63298
(43) Veröffentlichungstag der Anmeldung: 20.10.1999
(73) Patentinhaber: ALFIT AKTIENGESELLSCHAFT, A-6840 Götzis (AT)
(72) Erfinder: Nigg, Alexander, 6844 Altach (AT)
(74) Vertreter: Hübscher, Helmut, Dipl.-Ing.

(56) Entgegenhaltungen:
- EP-A- 0 674 109
- WO-A-97/16090
- US-A- 5 114 203

## Beschreibung

Die Erfindung betrifft eine Befestigungsanordnung, bei der ein relativ flacher Teil mit einem dickeren Teil durch wenigstens eine Schraube und einen zugehörigen Spreizdübel verbindbar ist, insbesondere zur Befestigung der Frontplatte oder Rückwand von Schubkästen an Flanschen von Seitenzargen, wobei der flache Teil ein Einsteckloch für den durch es hindurch bis zu einem Anschlagkopf einführbaren, mit seinem Spreizkörper in eine Öffnung oder Sackbohrung des dickeren Teiles einsteckbaren Spreizdübel aufweist.

Eine ähnliche Befestigungsanordnung ist aus der WO 97/16090 bekannt.

Bisher ist es bei derartigen Befestigungsanordnungen notwendig, Dübel und Schraube gesondert anzubringen, wobei zunächst der Dübel eingeführt und dann die Schraube angezogen wird. Das Einsteckloch ist als Rundloch ausgeführt und hat meist den gleichen Durchmesser wie die Öffnung bzw. Sackbohrung. Falls nicht mit ganz engen Passungen gearbeitet wird, besteht die Gefahr, daß die Schraube zumindest am Beginn des Anziehvorganges den Dübel auf Drehung mitnimmt, so daß mit besonders hohem Werkzeugdruck auf die Schraube gearbeitet werden muß. Das Anbringen von Dübel und Schraube kann erst im Zuge der Endmontage erfolgen, wobei sich durch die hiefür notwendigen Handgriffe die Gesamtzeit der Endmontage in unerwünschter Weise beträchtlich verlängert.

Für viele Montageaufgaben wäre es erwünscht, Dübel und Schraube in vormontiertem, also leicht ineinandergeschraubtem Zustand verwenden zu können, wobei ein weiterer Wunsch darin besteht, Dübel und Schraube bereits am flachen Teil anzubringen, so daß bei der Endmontage nur mehr eine Einführung des Dübels in das entsprechende Loch des dickeren Teiles vorzunehmen und dann die Schraube anzuziehen ist.

Demnach besteht die Aufgabe der vorliegenden Erfindung darin, eine Befestigungsanordnung zu schaffen, bei der Dübel und Schraube vormontiert verwendet und für sich am flacheren Teil angebracht werden können, wobei zusätzlich beim Anziehen der Schraube eine Verdrehungssicherung des Dübels gegeben sein soll.

Die gestellte Aufgabe wird dadurch gelöst, daß der Spreizdübel zwischen seinem Kopf und dem in die Öffnung oder Sackbohrung einsteckbaren Spreizkörperteil einen abgesetzten Hals aufweist, der außen Abfasungen oder ein Kantprofil zur verdrehungssicheren Abstützung an angepaßten Gegenflächen des Einsteckloches aufweist.

Schraube und Dübel können bereits vormontiert und dann in das Einsteckloch eingeführt werden. Zusätzlich zu der erzielbaren Verdrehungssicherung läßt sich eine besonders haltbare Verbindung dadurch erzielen, daß der Dübel auch im Halsbereich über die einführbare bzw. angezogene Schraube spreiz- oder aufweitbar bzw. stauchbar ausgebildet sein kann, so daß er sich beim Anziehen der Schraube auch im Durchsteckbereich festklemmt.

Eine Vormontage der Schrauben-Dübeleinheit am flacheren Teil wird nach einer Weiterbildung der Erfindung in einfacher Weise dadurch möglich, daß das Einsteckloch als vom Rand des flachen Teiles ausgehendes Langloch ausgebildet ist oder einen Langlochteil aufweist, wobei der Dübel vom Rand des flachen Teiles her oder nach seiner Einführung in einen das Langloch schlüssellochartig ergänzenden, dem Spreizkörperdurchmesser des Dübels angepaßten Rundlochteil unter Querverstellung mit seinem Halsteil einsteckbar ist. Dabei kann die Vormontage von jener Seite des flacheren Teiles erfolgen, von dem auch die Schraube anzuziehen ist. Falls bei Sonderkonstruktionen der Kopfteil des Dübels und auch der Schraubenkopf einen etwas kleineren Durchmesser als der Spreizkörper haben, kann man das Rundloch in seinem Durchmesser auch an den Kopfteildurchmesser von Schraube bzw. Dübel, je nachdem welcher Kopf größer ist, anpassen, also etwas kleiner als den Spreizkörperdurchmesser wählen, wobei dann diese Teile von der Rückseite des flachen Teiles durchgefädelt werden.

Bei der beschriebenen, bevorzugten Ausführung ist nach einer vorteilhaften Weiterbildung zwischen Rund- und Langlochteil bzw. am offenen Ende des Einsteckloches eine als Verliersicherung dienende, von Einsprüngen bestimmte Engstelle vorgesehen.

Weitere Einzelheiten und Vorteile des Erfindungsgegenstandes entnimmt man der nachfolgenden Zeichnungsbeschreibung.

In der Zeichnung ist der Erfindungsgegenstand beispielsweise veranschaulicht. Es zeigen
- Fig. 1: eine Schrauben-Dübeleinheit in der vormontierten Stellung bei im Schnitt dargestelltem Dübel,
- Fig. 2: die Schrauben-Dübeleinheit nach Fig. 1 bei der Montage eines flachen Teiles an einem dickeren Teil und
- Fig. 3: als Detail zu Fig. 2 eine Draufsicht, bei der die Schraube abgenommen und der Dübel im Halsbereich im Schnitt dargestellt wurde.

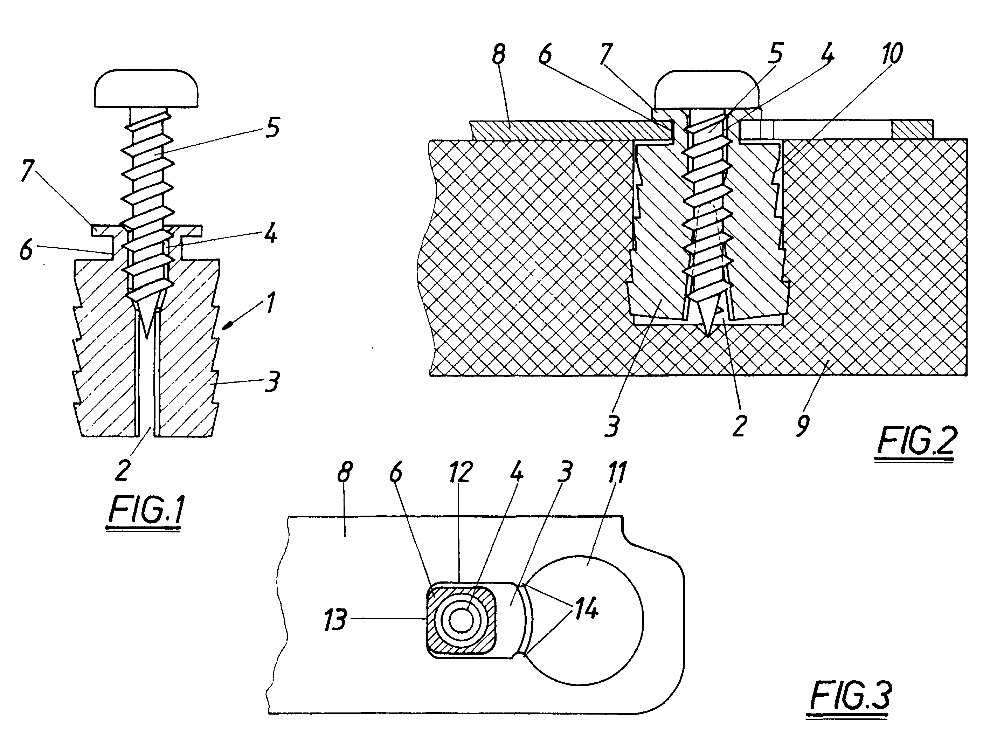

Der bei der Befestigungsanordnung nach den Fig. 1 - 3 verwendete Dübel 1 ist als Spreizdübel ausgebildet und besitzt einen durch Schlitze 2 teilweise aufgespaltenen Spreizkörper 3 und eine in diesen Spreizkörper 3 und in den Schlitzbereich 2 hineinführende Einschrauböffnung 4 für eine Schraube 5, deren wirksamer Durchmesser etwas größer als jener der Einschrauböffnung 4 gewählt ist. Oben schließt an den Spreizkörper 3 ein abgesetzter Hals 6 an, der, wie insbesondere Fig. 3 zeigt, bei kleinerem Durchmesser als der Spreizkörper 3 und ein an den Hals 6 anschließender Kopfteil 7 eine vorzugsweise quadratisch prismatische Außenform aufweist.

In den Fig. 2 und 3 ist die Befestigung eines flachen Teiles 8, z. B. des Befestigungsflansches einer Schubkastenseitenzarge an einem dickeren Teil 9, z. B. an der Frontplatte einer Schublade, gezeigt, wobei im dickeren Teil 9 eine Sackbohrung 10 zur Aufnahme des Spreizkörpers 3 des Dübels vorhanden ist. Der flache Teil 8 besitzt ein schlüssellochartig ausgebildetes Einsteckloch, das aus einem Rundfloch 11, dessen Durchmesser dem Durchmesser des Spreizkörpers 3 entspricht und einem Langloch 12 besteht, dessen Ende 13 flach ist, so daß die drei Begrenzungsseiten des Langloches 12 mit drei Außenseiten des im Querschnitt quadratischen Halses zusammenwirkend eine Verdrehungssicherung bilden. Am Übergang vom Rundloch 11 in das Langloch 12 sind Einsprünge 14 vorhanden, so daß in diesem Bereich der Durchtrittsweg etwas schmäler als die Quadrat-Seitenlänge des Halses 6 ist und durch die Einsprünge 14, an denen vorbei der Dübel 1 mit seinem Hals 6 in den Langlochteil 12 eingeschnappt wird, eine Verliersicherung entsteht. Dübel 1 und Schraube 5 können also in einer vormontierten Stellung im Langloch 12 des Teiles 8 angebracht werden, wonach erst der Teil 8 am Teil 9 zu einer beliebigen Zeit unter Einführen des Dübelspreizkörpers 3 in die Sackbohrung 10 und Anziehen der Schraube 5 die Endbefestigung erfolgt, bei der auch der Halsteil 6 und der runde Kopf 7 des Dübels 1 gegen den Teil 8 verspannt werden, wobei der Hals 6 gestaucht wird, so daß er sich im Langloch 12 festklemmt. Auch eine durch Anziehen der Schraube spreiz- oder aufweitbare Ausgestaltung des Halsteiles 6 ist möglich.

## Patentansprüche

1. Befestigungsanordnung, bei der ein relativ flacher Teil (8) mit einem dickeren Teil (9) durch wenigstens eine Schraube (5) und einen zugehörigen Spreizdübel (1) verbindbar ist, insbesondere zur Befestigung der Frontplatte (9) oder Rückwand von Schubkästen an Flanschen (8) von Seitenzargen, wobei der flache Teil (8) ein Einsteckloch (11, 12) für den durch es hindurch bis zu einem Anschlagkopf (7) einführbaren, mit seinem Spreizkörper (3) in eine Öffnung oder Sackbohrung (10) des dickeren Teiles (9) einsteckbaren Spreizdübel (1) aufweist, **dadurch gekennzeichnet, daß** der Spreizdübel (1) zwischen seinem Kopf (7) und dem in die Öffnung (10) oder Sackbohrung einsteckbaren Spreizkörperteil (3) einen abgesetzten Hals (6) aufweist, der außen Abfasungen oder ein Kantprofil zur verdrehungssicheren Abstützung an angepaßten Gegenflächen (12, 13) des Einsteckloches (11, 12) aufweist.

2. Befestigungsanordnung nach Anspruch 1, **dadurch gekennzeichnet, daß** der Dübel (1) auch im Halsbereich (6) über die einführbare bzw. angezogene Schraube (5) spreiz- oder aufweitbar bzw. stauchbar ausgebildet ist, so daß er sich beim Anziehen der Schraube (5) auch im Durchsteckbereich (12, 13) festklemmt.

3. Befestigungsanordnung nach Anspruch 1 oder 2, **dadurch gekennzeichnet, daß** das Einsteckloch (12) als vom Rand des flachen Teiles (8) ausgehendes Langloch ausgebildet ist oder einen Langlochteil aufweist, wobei der Dübel (11) vom Rand des flachen Teiles her oder nach seiner Einführung in einen das Langloch schlüssellochartig ergänzenden, dem Spreizkörperdurchmesser des Dübels (1) angepaßten Rundlochteil (11) unter Querverstellung mit seinem Halsteil (6) einsteckbar ist.

4. Befestigungsanordnung nach Anspruch 3, **dadurch gekennzeichnet, daß** zwischen Rund- und Langlochteil (11, 12) bzw. am offenen Ende des Einsteckloches eine als Verliersicherung dienende, von Einsprüngen (14) bestimmte Engstelle vorgesehen ist.

## Claims

1. A fixing arrangement, in which a relatively flat part (8) is connectable to a thicker part (9) by at least one screw (5) and an associated expanding dowel (1), particularly for fixing the front panel (9) or back wall of drawers to flanges (8) of side frames, the flat part (8) having a hole (11, 12) for insertion of the expanding dowel (1), which can be introduced through said hole as far as an abutment head (7) and which is adapted to be inserted with its expanding body (3) into an opening or blind bore (10) in the thicker part (9), **characterised in that** between its head (7) and the expanding body part (3) insertable into the opening (10) or blind bore the expanding dowel (1) has a shouldered neck (6) the outside of which has chamfers or an edge profile to support it against adapted companion surfaces (12, 13) of the hole (11, 12) in such manner that it is secured against rotation.

2. A fixing arrangement according to claim 1, **characterised in that** the dowel (1) is also constructed to be expandable or openable or compressible in the neck region (6) by means of the insertable or tightened screw (5) so that on tightening of the screw (5) it is also clamped fast in the passage zone (12, 13).

3. A fixing arrangement according to claim 1 or 2, **characterised in that** the insertion hole (12) is constructed as a slot extending from the edge of the flat part (8) or has a slot part, the dowel (11) being insertable, by its neck part (6), with transverse displacement, from the edge of the flat part or after its introduction into a round hole part (11) completing the slot after the style of a keyhole and adapted to the diameter of the expanding body of the dowel (1).

4. A fixing arrangement according to claim 3, **characterised in that** a narrowing serving as security against loss and defined by constricted portions (14), is provided between the round hole part and the slot part (11, 12) and at the open end of the insertion hole.

## Revendications

1. Dispositif de fixation, dans lequel une partie (8) relativement plate est susceptible d'être reliée à une partie (9) plus épaisse, à l'aide d'au moins une vis (5) et d'une cheville à écartement (1) afférente, en particulier pour la fixation de la plaque avant (9) ou de la paroi arrière de caissons de tiroirs, sur des rebords (8) de parois latérales, sachant que la partie plate (8) présente un trou d'enfichage (11, 12), pour la cheville à écartement (1) susceptible d'être introduite à travers le trou jusqu'à une tête de butée (7), cheville susceptible d'être enfichée, par son corps à écartement (3), dans une ouverture ou un trou borgne (10) de la partie (9) plus épaisse, **caractérisé en ce que** la cheville à écartement (1) présente, entre sa tête (7) et la partie de corps à écartement (3), enfichable dans l'ouverture ou trou borgne (10), un col (6) ayant un décrochement, qui présente extérieurement des chanfreins ou un profil polygonal pour assurer le soutien, assujetti en rotation, sur des surfaces conjuguées (12, 13) adaptées du trou d'enfichage (11, 12).

2. Dispositif de fixation selon la revendication 1, **caractérisé en ce que** la cheville (1) est réalisée de façon à pouvoir être écartée ou élargie ou écrasée, également dans la zone de col (6), par l'intermédiaire de la vis (5) pouvant être introduite ou ayant été serrée, de manière que, lors du serrage de la vis (5), la cheville se bloque par serrage également dans la zone d'enfichage (12,13).

3. Dispositif de fixation selon la revendication 1 ou 2, **caractérisé en ce que** le trou d'enfichage (12) est réalisé sous la forme de trou oblong, partant du bord de la partie plate (8), ou présente une partie de trou oblong, la cheville (11) étant enfichable par sa partie de col (6), avec un déplacement transversal, depuis le bord de la partie plate, ou après son introduction dans une partie de trou rond (11) complétant le trou oblong à la façon d'un trou de clé, adaptée au diamètre du corps à écartement de la cheville (1).

4. Dispositif de fixation selon la revendication 3, **caractérisé en ce que**, entre la partie de trou rond et la partie de trou oblong (11, 12), respectivement sur l'extrémité ouverte du trou d'enfichage, est prévu un point étroit servant de sécurité anti-perte, déterminé par des retraits (14).
